# FASCICULE DE BREVET EUROPEEN

(11) **EP 1 493 529 B1**
(45) Date de publication et mention de la délivrance du brevet: **03.01.2007**
(21) Numéro de dépôt: 04360059.2
(22) Date de dépôt: 22.06.2004
(51) Int. Cl.: B23P 19/00, B23P 19/02, B23P 21/00, B23Q 16/10

(54) **Machine d'assemblage avec une tourelle portant plusieurs outils d'assemblage**
Montagemaschine mit einem Montagewerkzeuge tragenden Revolver
Assembling machine with a turret carrying a plurality of assembling tools

(30) Priorité: 02.07.2003 FR 0308007
(43) Date de publication de la demande: 05.01.2005
(73) Titulaire: Industrie Automation S.A., 68190 Ensisheim (FR)
(72) Inventeur: Schmitt, Hubert, 68720 Zillisheim (FR)
(74) Mandataire: Nithardt, Roland

(56) Documents cités:
- FR-A- 2 631 872
- US-A- 5 509 192
- PATENT ABSTRACTS OF JAPAN vol. 1999, no. 11, 30 septembre 1999 (1999-09-30) & JP 11 151623 A (KUMADA SADAMICHI), 8 juin 1999 (1999-06-08)

## Description

La présente invention concerne une machine d'assemblage d'au moins deux pièces mécaniques comportant au moins un bâti, un chariot mobile en translation par rapport audit bâti selon une direction parallèle à l'axe d'assemblage des pièces, ce chariot étant pourvu d'au moins un outil d'assemblage en position travail confondu avec ledit axe d'assemblage et portant au moins une première pièce à assembler, des moyens d'actionnement couplés audit chariot pour l'entraîner en translation et des moyens de positionnement agencés pour présenter la seconde pièce à assembler dans ledit axe d'assemblage.

Il est connu d'utiliser des machines d'assemblage individuelles pour effectuer l'assemblage mécanique de pièces, ces machines n'ayant généralement qu'une seule fonction et étant spécifique pour chaque type d'assemblage. De plus, à chaque type de pièce à assembler correspond un outil d'assemblage. Il est donc nécessaire d'effectuer une opération de démontage - remontage de l'outil à chaque changement de série. Cette opération discontinue ne peut s'intégrer dans un processus continu, par exemple dans une ligne de montage classique. Par ailleurs, dans certains domaines de l'assemblage, comme pour l'emmanchement, les forces nécessaires sont très importantes et variables selon les tolérances de montage des pièces. On peut citer par exemple l'emmanchement de bagues dans un carter de moteur à combustion. Par conséquent, dans cette application spécifique de l'emmanchement, les contraintes sont très sévères en terme d'alignement des pièces à assembler, de précision de la profondeur d'emmanchement, d'énergie à fournir, etc.

On cherche à optimiser l'utilisation de ce type de machines d'assemblage pour limiter les investissements nécessaires et si possible augmenter leur rendement. Une des solutions proposées consiste à équiper la machine d'une tourelle porte-outils permettant de réduire le temps de changement de l'outil d'assemblage. Une machine d'emmanchement de ce type existe et comporte une tourelle portant plusieurs outils d'emmanchement, l'axe de rotation de la tourelle et l'axe des outils étant tous parallèles à l'axe d'emmanchement. Cette disposition génère des inconvénients puisque les outils en attente interfèrent avec les pièces à emmancher. Pour solutionner ce problème, chaque porte-outil est monté sur un chariot pour dégager les outils en attente par rapport à l'outil en travail. La course de l'outil en travail est donc plus grande et la machine plus haute. Par ailleurs, cette machine comporte en plus une contre-tourelle disposée sous une table de référence. Cette contre-tourelle dispose également de chariots mobiles en translation, qui permettent de rapprocher un contre-outil de la table de référence, ce qui génère des mouvements supplémentaires. Le blocage en position haute du contre-outil est obtenu par un verrou mécanique, ce qui peut s'avérer insuffisamment rigide. Cette machine est par conséquent complexe, onéreuse, encombrante et peu fiable. Etant donné qu'elle comporte plusieurs moyens d'actionnement et d'entraînement, elle nécessite également une gestion des mouvements sophistiquée, source de dysfonctionnements.

Par ailleurs, l'utilisation de tourelles porte-outils dans le domaine de la machine d'usinage est courant et largement répandue. Néanmoins, la conception de ce type de machines n'est pas du tout adaptée au domaine de l'assemblage, les contraintes et cahiers de charges n'étant pas compatible. De ce fait, une simple transposition des techniques utilisées dans le domaine de l'usinage au domaine de l'assemblage n'est pas envisageable.

La présente invention vise à pallier ces inconvénients en proposant une machine d'assemblage de conception simple et optimisée, économique, compacte, fiable, flexible, modulaire pour s'adapter aisément à une large gamme d'applications et évolutive.

Dans ce but, l'invention concerne une machine d'assemblage du genre indiqué en préambule, caractérisée en ce qu'elle comporte une tourelle agencée pour porter plusieurs outils d'assemblage, ladite tourelle étant montée mobile en rotation sur ledit chariot autour d'un axe de rotation non parallèle audit axe d'assemblage et disposée de manière à présenter un seul outil d'assemblage en position de travail, les autres outils d'assemblage étant en position d'attente sur des axes distincts dudit axe d'assemblage, ladite tourelle étant disposée sur ledit chariot de manière que l'effort de poussée généré par les moyens d'actionnement soit transmis audit outil d'assemblage en position travail par ledit chariot sans être repris par ladite tourelle.

Cette conception particulière de l'ensemble chariot - tourelle porte-outils permet d'aligner l'outil d'assemblage en position travail sur les moyens d'actionnement pour éviter tout porte-à-faux et de dégager les outils d'assemblage en position d'attente par rapport à l'outil d'assemblage en position travail.

L'axe de rotation de la tourelle et l'axe d'assemblage ramenés dans un même plan sont sécants d'un angle α pouvant être compris entre 30° et 60° et de préférence égal à 45°.

De préférence, la tourelle comporte au moins un corps intérieur creux solidaire du chariot et un corps extérieur creux mobile en rotation par rapport au corps intérieur par des moyens de roulement. Elle peut comporter une ouverture centrale traversante pour le passage de conduits techniques.

Dans une forme de réalisation préférée, la machine d'assemblage comporte des moyens d'entraînement en rotation de la tourelle pourvus d'au moins un moteur couplé à un pignon moteur engrenant un pignon récepteur couplé au corps extérieur de la tourelle.

Le pignon récepteur est avantageusement formé par une couronne extérieure dentée solidaire des moyens de roulement.

Les outils d'assemblage sont, de préférence, montés sur la tourelle par des moyens de fixation démontables.

Dans la forme de réalisation préférée, chaque outil d'assemblage comporte au moins un corps creux fixe dans lequel coulisse un fourreau présentant une extrémité interne intérieure à la tourelle agencée pour recevoir ledit effort de poussée et une extrémité externe extérieure à la tourelle agencée pour recevoir une tête d'outil adaptée à la première pièce à assembler, un organe de rappel étant disposé entre ledit corps et ledit fourreau pour solliciter le fourreau en position sortie.

La tourelle peut comporter une butée intérieure fixe agencée pour limiter la course axiale du fourreau des outils d'assemblage en position rentrée.

Dans la forme de réalisation préférée, les moyens d'actionnement comportent au moins un moteur couplé à une vis engrenant un écrou solidaire du chariot mobile.

Ces moyens d'actionnement comportent avantageusement une pièce de transmission disposée dans l'axe d'assemblage entre le chariot et l'outil d'assemblage en position travail pour transmettre l'effort de poussée directement sans qu'il soit repris par la tourelle.

Les moyens de positionnement de la seconde pièce à assembler peuvent comporter une table de référence présentant au moins une surface plane perpendiculaire ou parallèle à l'axe d'assemblage selon les cas.

Selon les variantes de réalisation, ils peuvent comporter un manipulateur agencé pour présenter la seconde pièce à assembler dans l'axe d'assemblage ou un convoyeur d'une ligne d'assemblage.

Dans la forme de réalisation préférée, la machine d'assemblage comporte au moins un contre-appui disposé dans l'axe d'assemblage à l'opposé de l'outil d'assemblage en position travail et agencé pour s'opposer audit effort de poussée.

Ce contre-appui comporte au moins un contre-outil d'assemblage et de préférence une contre-tourelle agencée pour porter plusieurs contre-outils d'assemblage, cette contre-tourelle étant montée mobile en rotation sur le bâti autour d'un axe de rotation non parallèle à l'axe d'assemblage et disposée de manière à présenter un seul contre-outil d'assemblage en position travail dans ledit axe d'assemblage, les autres contre-outils d'assemblage étant en position d'attente sur des axes distincts dudit axe d'assemblage.

L'axe de rotation de la contre-tourelle et l'axe d'assemblage ramenés dans un même plan sont sécants d'un angle α pouvant être compris entre 30° et 60° et de préférence égal à 45 °.

Le contre-appui peut être fixe en translation par rapport au bâti tandis que les moyens de positionnement peuvent être mobiles en translation par rapport à ce bâti et se déplacer avec le chariot mobile. Le contraire est également possible selon les applications, à savoir que les moyens de positionnement peuvent être fixes en translation par rapport au bâti et le contre-appui peut être mobile en translation par rapport à ce bâti. Dans certains cas, les moyens de positionnement et le contre-appui peuvent être intégrés.

Les moyens d'actionnement peuvent également comporter au moins un capteur d'effort disposé entre le chariot et l'outil d'assemblage en position de travail pour contrôler l'effort de poussée.

La présente invention et ses avantages apparaîtront mieux dans la description suivante de plusieurs modes de réalisation, donnés à titre d'exemples non limitatifs, en référence aux dessins annexés, dans lesquels :
- la figure 1 représente une machine d'assemblage selon l'invention vue en perspective,
- la figure 2 est une vue de coté en coupe de la machine de la figure 1,
- la figure 3 est une vue avant de la tourelle porte-outils,
- la figure 4 est une vue de coté de la tourelle de la figure 3,
- la figure 5 est une vue de coté en coupe de la tourelle de la figure 3,
- la figure 6 est une vue en coupe d'un outil d'assemblage, et
- les figures 7 à 10 sont des vues de la machine d'assemblage selon l'invention dans différentes configurations d'utilisation.

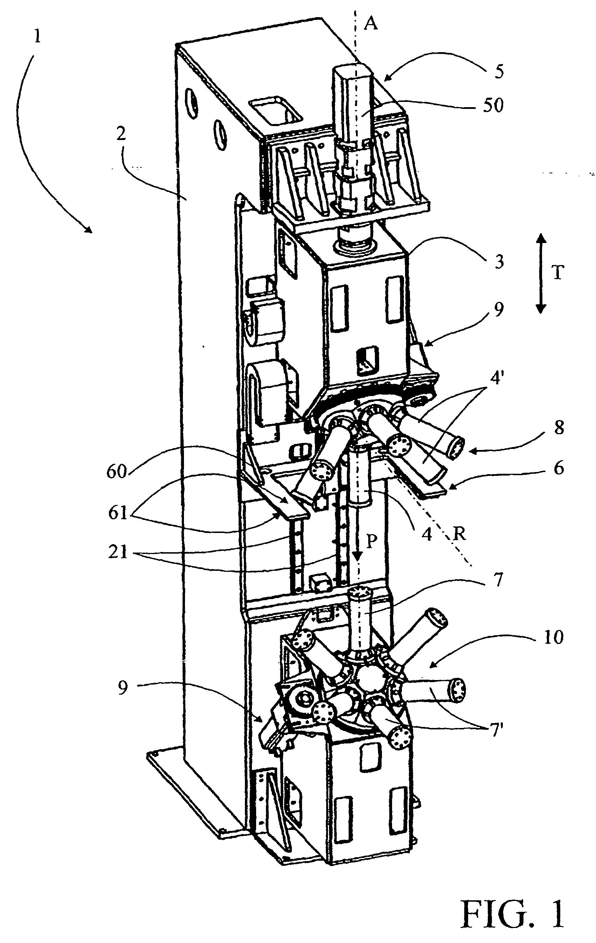

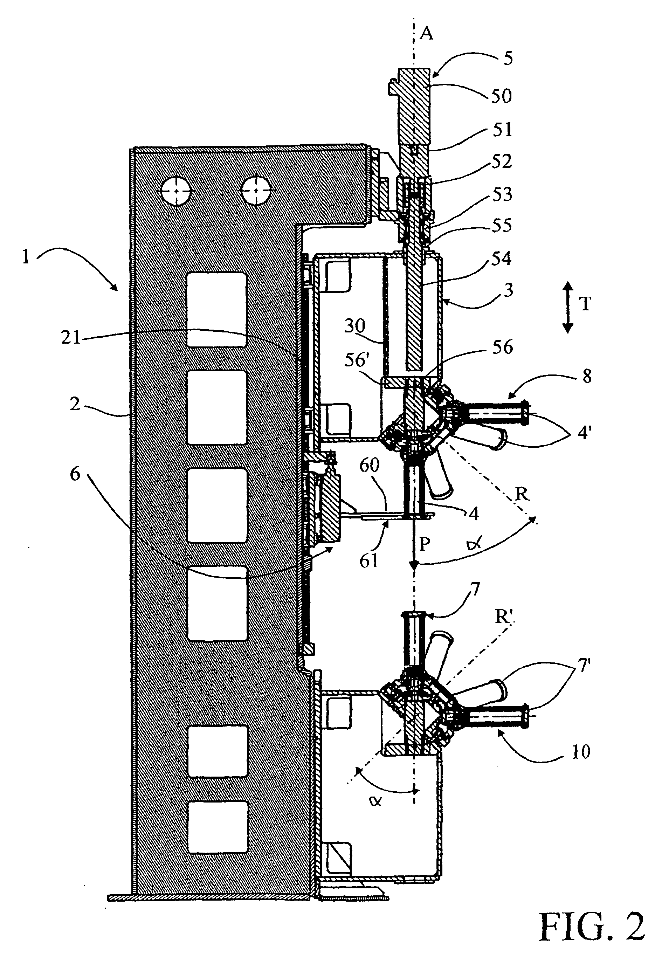

En référence aux figures 1 et 2, la machine d'assemblage 1 selon l'invention est destinée à assembler au moins deux pièces mécaniques, par exemple par emmanchement, emboîtement, encliquetage, etc. Cette machine d'assemblage 1 comporte un bâti 2 sur lequel coulisse un chariot 3 le long de deux rails de guidage 21, qui peuvent être des rails à billes par exemple. Ce chariot 3 est mobile en translation selon une direction matérialisée par une double flèche T sensiblement parallèle à l'axe d'assemblage A des pièces à assembler. Il est pourvu d'au moins un outil d'assemblage 4 dont l'axe, en position travail, est confondu avec l'axe d'assemblage A portant au moins une première pièce à assembler. Cette machine d'assemblage 1 comporte également des moyens d'actionnement 5 couplés au chariot 3 pour l'entraîner en translation.

Dans l'exemple représenté, les moyens d'actionnement 5 comportent, de manière connue, un servomoteur électrique 50, un réducteur 51 qui peut être optionnel, un accouplement mécanique 52, un palier 53 solidaire du bâti 2 et formé par exemple d'une butée axiale à rouleaux, ainsi qu'une vis 54 engrenant un écrou 55 solidaire du chariot 3. L'ensemble vis/écrou est du type à billes ou à rouleaux satellites ou tout autre type adéquat. Le codeur du servomoteur électrique 50 permet de contrôler le déplacement du chariot 3. Bien entendu, ces moyens d'actionnement 5 peuvent être constitués par d'autres équipements, tels que d'autres types de moteurs électriques, un vérin hydraulique, etc.

La machine d'assemblage 1 selon l'invention comporte tout particulièrement une tourelle 8 agencée pour porter plusieurs outils d'assemblage 4, 4', par exemple six comme représenté. Cette tourelle 8 est montée mobile en rotation sur le chariot 3 autour d'un axe de rotation R non parallèle à l'axe d'assemblage A et disposée de manière à présenter un seul outil d'assemblage 4 en position travail, les autres outils d'assemblage 4' étant en position d'attente sur des axes distincts de l'axe d'assemblage A. L'axe de rotation R de la tourelle 8 et l'axe d'assemblage A ramenés dans un même plan sont sécants d'un angle α compris entre 30° et 60° et par exemple égal à 45° comme dans les figures.

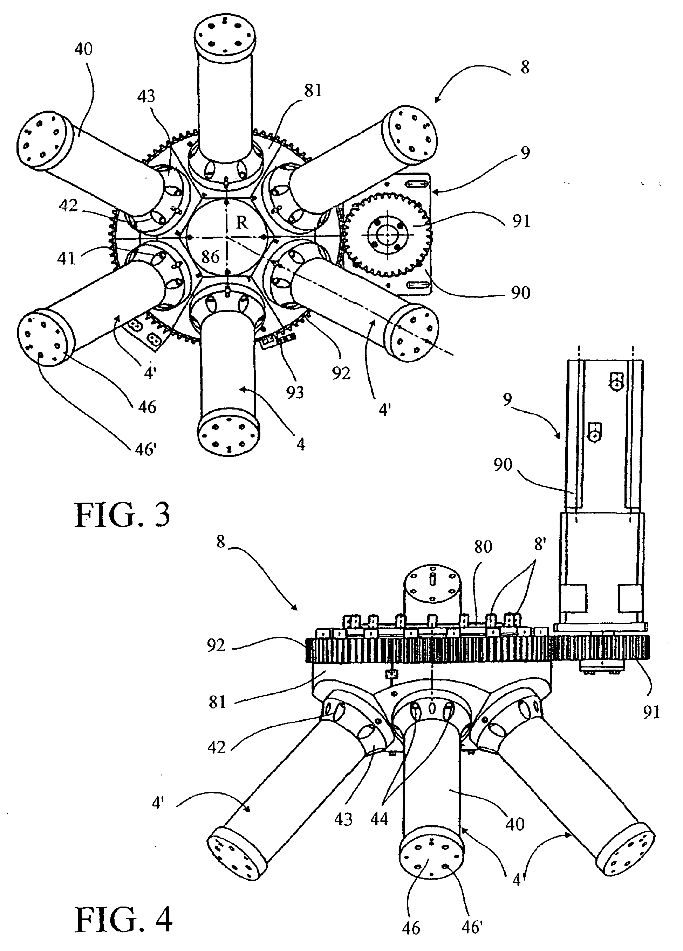

Cette tourelle 8 est représentée plus en détail dans les figures 3 à 5. Elle comporte un corps intérieur 80 creux solidaire du chariot 3 et un corps extérieur 81 creux mobile en rotation par rapport au corps intérieur 80 au moyen d'un roulement 82 à rouleaux coniques par exemple ou de tout autre moyen de roulement adéquat. Elle est associée à des moyens d'entraînement en rotation 9 pourvus d'un moteur électrique 90 couplé à un pignon moteur 91 engrenant un pignon récepteur 92 solidaire de la tourelle 8.

Dans l'exemple représenté, le pignon récepteur 92 est formé par une couronne extérieure dentée intégrée à la bague extérieure 82' du roulement 82. La bague intérieure 82" de ce roulement 82 est fixée sur le corps intérieur 80, lui-même fixé sur le chariot 3 par des vis de fixation 80'. Le moteur électrique 90 peut être un moteur pas à pas, un servomoteur ou être associé à un capteur de position 93 pour assurer le positionnement correct de l'outil d'assemblage 4 en position travail, c'est-à-dire dans l'axe d'assemblage A.

Le corps extérieur 81 comporte une partie sensiblement tronconique dans laquelle sont prévus des logements 83 traversants destinés à recevoir chacun un outil d'assemblage 4, 4'. Ces logements 83 sont disposés sur un même cercle dont le centre est confondu avec l'axe de rotation R, de sorte que les axes des outils d'assemblage 4, 4' coupent l'axe de rotation R en un même point P. Le corps intérieur 80 forme en regard des outils d'assemblage 4, 4' une butée axiale 84 limitant la course de la partie mobile de ces outils en position rentrée comme expliqué plus loin.

Le corps intérieur 80 de la tourelle 8 est creux pour permettre la transmission de l'effort de poussée généré par les moyens d'actionnement 5 à l'outil d'assemblage 4 en position travail sans être repris par la tourelle 8, cette transmission étant assurée, dans l'exemple représenté, par une pièce de transmission 56 comme expliqué plus loin. La face avant de la tourelle 8 comporte une ouverture centrale 85 traversante disposée entre les logements 83 pour le passage d'éventuels conduits techniques permettant d'alimenter les outils d'assemblage 4, 4' en eau, en huile, en air, en électrique, etc. par exemple. Quand elle n'est pas utilisée, cette ouverture 85 est obturée par un couvercle 86.

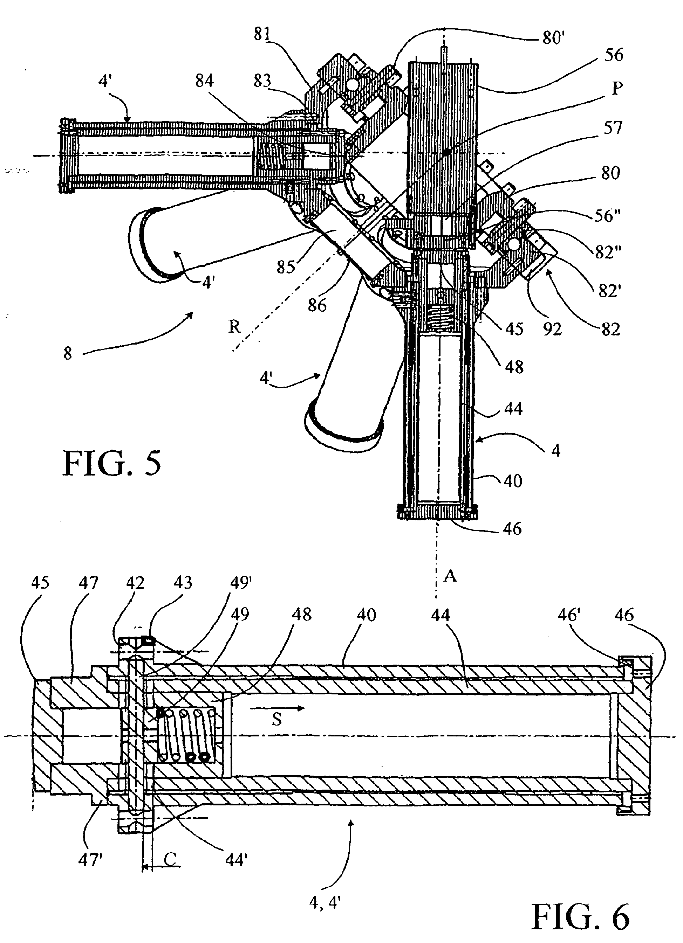

Un des outils d'assemblage 4, 4' est représenté en détail à la figure 6. Il comporte un corps 40 tubulaire destiné à être fixé sur la tourelle 8 par des moyens de fixation du type machine-outil, c'est-à-dire rapides, démontables, auto centrés, sans réglage ni entretien. Dans l'exemple représenté, ces moyens sont constitués par des vis de fixation 41 (fig. 3, 4) traversant des orifices 42 ménagés dans une bride 43. Tout autre moyen de fixation démontable peut être prévu comme par exemple des raccords rapides, des systèmes à baïonnette, etc. L'outil d'assemblage 4, 4' comporte un fourreau 44 monté coulissant dans le corps 40 et le traversant de part en part. Ce fourreau 44 comporte une extrémité interne 45 intérieure à la tourelle 8 agencée pour recevoir l'effort de poussée P et une extrémité externe 46 extérieure à la tourelle 8 agencée pour recevoir une tête d'outil (non représentée) adaptée à la première pièce à assembler. L'extrémité externe 46 est constituée d'un embout discal emboîté ou rendu solidaire du fourreau 44 et recouvrant l'extrémité correspondante du corps 40. Elle comporte un ensemble de trous 46' filetés ou non pour recevoir les organes de fixation de la tête d'outil. L'extrémité interne 45 comporte un embout discal emboîté ou rendu solidaire d'une pièce intermédiaire 47 elle-même emboîtée ou rendue solidaire du fourreau 44. Un organe de rappel 48 est disposé entre le corps 40 et le fourreau 44 pour le solliciter en position sortie représentée par la flèche S. Cet organe de rappel 48 est constitué d'un ressort hélicoïdal logé dans le fond de la pièce intermédiaire 47 en appui sur une butée axiale 49. Cette butée axiale 49 est rendue solidaire du corps 40 par une goupille 49'. La course axiale C du fourreau 44 est limitée en position sortie par l'épaulement 47' de la pièce intermédiaire 47 en butée contre le corps 40 et en position rentrée par le trou oblong 44' prévu respectivement dans la pièce intermédiaire 47 et le fourreau 44 au travers duquel passe la goupille 49'. La position rentrée du fourreau 44 est également limitée par la butée axiale 84 formée par le corps intérieur 80 de la tourelle 8. Cette course axiale C constitue un jeu de fonctionnement entre l'outil d'assemblage 4, la tourelle 8 et la pièce de transmission 56 pendant l'opération de changement d'outil d'assemblage 4, 4' pour permettre la rotation de la tourelle 8 sans frottement.

Ces outils d'assemblage 4, 4' peuvent être conçus, en partie ou en totalité, de manière standard pour rationaliser la fabrication et la gestion des stocks. Par exemple, l'extrémité interne 45 et les moyens de fixation sont standard tandis que l'extrémité externe 46 est variable selon le type de têtes d'outil (non représentées) à recevoir.

Grâce à la conception particulière de la tourelle 8, l'outil d'assemblage 4 en position travail reçoit directement l'effort de poussée P généré par les moyens d'actionnement 5 sans qu'il soit repris par la tourelle 8. En effet, cet effort de poussée P est transmis de la vis 54 au chariot 3 par l'écrou 55 puis du chariot 3 à l'outil d'assemblage 4 par la pièce de transmission 56 solidaire du chariot 3. A cet effet, le chariot 3 comporte des nervures 30 qui permettent la transmission de cet effort entre l'écrou 55 et la pièce de transmission 56. Ainsi, la tourelle 8, son roulement 82 et ses moyens d'entraînement en rotation 9 n'ont pas besoin d'être surdimensionnés pour supporter des charges importantes, puisque cette tourelle 8 ne doit assurer qu'une fonction de support et de changement d'outils d'assemblage 4, 4'. De ce fait, les coûts de mise en oeuvre et de maintenance d'une telle tourelle 8 sont très réduits.

Cette pièce de transmission 56 est constituée d'un tube plein pourvu à l'une de ses extrémités d'une semelle 56' destinée à être fixée sur le chariot 3 et à l'autre extrémité d'un embout discal 56" destiné à venir en appui plan contre l'extrémité intérieure 45 de l'outil d'assemblage 4 en position travail. Cette pièce de transmission 56 peut être complétée par un capteur d'effort 57 apte à contrôler l'effort de poussée P et à détecter le seuil de la contre-poussée indiquant que l'assemblage est effectué. D'autres types de capteurs peuvent être prévus selon les contrôles à effectuer.

Dans le domaine de l'assemblage, les efforts de poussée P sont très importants et peuvent atteindre plusieurs tonnes. Il est par conséquent indispensable pour obtenir un assemblage de qualité, sans détérioration, ni déformation, que les deux pièces à assembler soient positionnées rigoureusement dans le même axe A que celui de l'effort de poussée P. Dans ce but, la machine d'assemblage 1 selon l'invention comporte, en référence aux figures 1 et 2, des moyens de positionnement 6 agencés pour présenter la seconde pièce à assembler dans l'axe d'assemblage A, ou tout au moins dans un axe colinéaire, l'auto-centrage sur l'axe d'assemblage A étant assuré à la fois par les chanfreins prévus sur les pièces à assembler et par la compliance radiale de l'outil d'assemblage 4. Ainsi, il n'est pas nécessaire de prévoir des moyens d'indexage des pièces à assembler. Ces moyens de positionnement 6 comportent une table de référence 60 présentant au moins une surface plane 61 perpendiculaire à l'axe d'assemblage A, cette surface plane 61 pouvant être sa face supérieure et/ou sa face inférieure. La table de référence 60 peut être montée fixe sur le bâti 2 ou mobile en translation selon la double flèche T le long les rails de guidage 21 du bâti 2 comme expliqué ci-après. La seconde pièce à assembler peut être présentée directement contre la surface plane 61 si elle comporte une surface de référence sensiblement plane ou par l'intermédiaire d'un adaptateur (non représenté). Cette seconde pièce avec ou sans adaptateur est généralement manipulée par un robot ou tout autre équipement similaire apte à la prélever d'un magasin, d'une palette ou d'une ligne d'assemblage et à la maintenir pendant l'opération d'assemblage.

La machine d'assemblage 1 selon l'invention peut être complétée par un contre-appui 7 disposé dans l'axe d'assemblage A à l'opposé de l'outil d'assemblage 4 en position de travail et en regard des moyens de positionnement 6 pour s'opposer à l'effort de poussée P. Le contre-appui est constitué d'un contre-outil d'assemblage 7, c'est-à-dire d'un outil complémentaire à l'outil d'assemblage 4. Dans l'exemple illustré dans les figures 1 et 2, le contre-appui comporte une contre-tourelle 10 agencée pour porter plusieurs contre-outils d'assemblage 7, 7' par exemple six comme représenté. Cette contre-tourelle 10 peut avoir une conception similaire à celle de la tourelle 8 portant les outils d'assemblage 4, 4' et être entraînée en rotation par des moyens d'entraînement 9 similaires. Elle est, dans l'exemple représenté, montée sur le bâti 2 mobile en rotation autour d'un axe R' sécant à l'axe d'assemblage A de manière à présenter un seul contre-outil d'assemblage 7 en position de travail dans l'axe d'assemblage A, les autres contre-outils d'assemblage 7' étant en position d'attente sur des axes distincts.

Dans ce cas, la table de référence 60 est montée mobile en translation par rapport au bâti 2 et est entraînée en direction de la contre-tourelle 10 par le chariot 3 lors d'une opération d'assemblage. Cette construction permet de garantir la rigidité mécanique du contre-appui 7 et simultanément le maintien en référence de la seconde pièce à assembler.

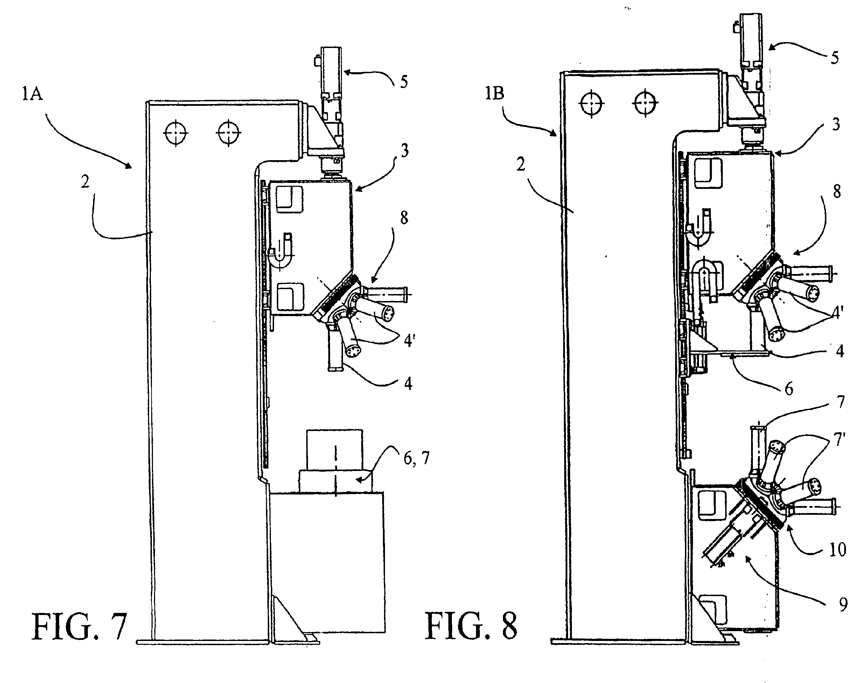

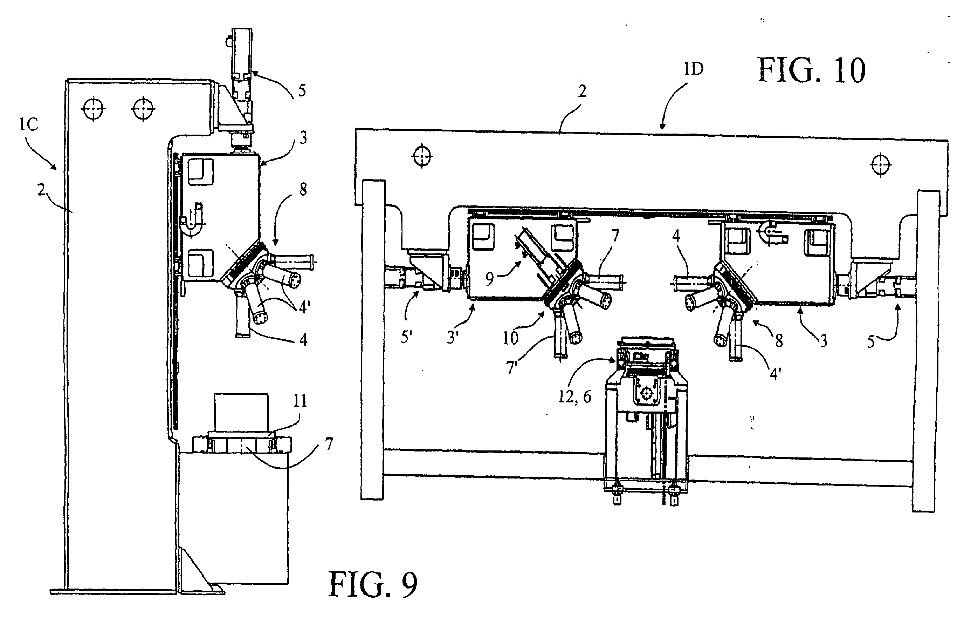

Cette machine d'assemblage 1 peut être facilement déclinée dans différentes versions selon l'équipement choisi en fonction du type de pièces à assembler et du type de poste de travail à savoir poste manuel, poste automatique, poste en ligne, poste hors ligne, etc. Les figures 7 à 10 illustrent quelques exemples d'utilisation. Dans la figure 7, la machine d'assemblage 1A est positionnée verticalement. Le contre-appui 7 et les moyens de positionnement 6 sont intégrés à une table de travail fixe. Dans la figure 8, la machine d'assemblage 1B correspond à la machine d'assemblage 1 décrite en référence aux figures 1 et 2, positionnée verticalement, et comporte un contre-appui 7 formé par une contre-tourelle 10. Dans la figure 9, la machine d'assemblage 1C est positionnée verticalement et intégrée dans une ligne d'assemblage, les secondes pièces à assembler étant acheminées par un convoyeur 11. Ces secondes pièces sont indexées et mises en référence au niveau du convoyeur 11 avec un contre-appui 7. Dans la figure 10, la machine d'assemblage 1D est positionnée horizontalement et intégrée dans une ligne d'assemblage, les secondes pièces à assembler étant acheminées par un convoyeur 12. Elle comporte un contre-appui 7 formé par une contre-tourelle 10. Dans ce cas, la contre-tourelle 10 est montée sur un chariot 3' mobile en translation par rapport au bâti 2 et déplacée par des moyens d'actionnement 5', qui peuvent être similaires au chariot 3 et aux moyens d'actionnement 5 associés à la tourelle 8 portant les outils d'assemblage 4, 4'. Les moyens de positionnement 6 sont, dans ce cas, constitués par le convoyeur 12, orienté parallèlement à l'axe d'assemblage A.

Le mode de fonctionnement de la machine d'assemblage 1 selon l'invention et en référence aux figures 1 à 6 est décrit à présent. Dans une première phase, l'opérateur prépare sa machine d'assemblage 1 en fonction du type d'assemblage à réaliser. Pour cela, il sélectionne les têtes d'outils dans un magasin spécifique puis les monte sur les extrémités 46 des outils d'assemblage 4, 4' et des contre-outils d'assemblage 7, 7'. Il peut aussi sélectionner les outils d'assemblage 4, 4' et les contre-outils d'assemblage 7, 7' complets dans un magasin spécifique puis les met en place respectivement sur la tourelle 8 et la contre-tourelle 10.

Pour effectuer un cycle d'assemblage, un manipulateur (non représenté), tel qu'un bras de préhension ou un robot, prélève une première pièce à assembler dans un magasin et la positionne sur la tête d'outil de l'outil d'assemblage 4 en position travail. Simultanément ou non, un autre manipulateur (non représenté) présente une seconde pièce à assembler en appui contre la table de référence 60, par exemple contre sa face inférieure 61 directement ou par l'intermédiaire d'un adaptateur (non représenté), de manière à aligner la seconde pièce sur l'axe d'assemblage A. Les moyens d'actionnement 5 sont activés et le chariot 3 commence sa descente, entraînant avec lui la table de référence 60 et la seconde pièce dès que l'outil d'assemblage 4 en position travail la rencontre, jusqu'au contre-outil d'assemblage 7 permettant de bloquer la seconde pièce en position. Le chariot 3 poursuit sa descente pour effectuer l'assemblage des deux pièces grâce à l'effort de poussée P. Dès que cet assemblage est effectué et se matérialise par une butée axiale, le capteur d'effort logé dans le chariot 3 enregistre une contre-poussée qui inverse les moyens d'actionnement 5 pour dégager l'outil d'assemblage 4 et le contre-outil d'assemblage 7 des deux pièces assemblées, qui peuvent être évacuées par le manipulateur. La course d'assemblage peut également être déterminée par la course du chariot 3, le codeur du servomoteur 50 ou par d'autres types de capteur.

Un nouveau cycle d'assemblage peut commencer. Une nouvelle première pièce est chargée sur la tête de l'outil d'assemblage en position travail, qui peut être le même que précédemment ou différent. Dans ce cas, les moyens d'entraînement 9 sont actionnés pour pivoter la tourelle 8 autour de son axe de rotation R et amener un outil d'assemblage 4' d'une position d'attente à la position travail. Ce changement est également opéré au niveau du contre-appui 7 en faisant tourner la contre-tourelle 10. Le manipulateur présente alors une nouvelle seconde pièce contre la table de référence 60 pour ce nouveau cycle d'assemblage.

Selon le type de pièces à assembler, on peut bien évidemment effectuer plusieurs assemblages sur une même seconde pièce. Dans ce cas, le manipulateur déplacera cette seconde pièce entre deux cycles d'assemblage pour positionner chaque fois une nouvelle zone à assembler dans l'axe d'assemblage A.

Bien entendu, cette machine d'assemblage peut être gérée, contrôlée, pilotée, alimentée automatiquement par une centrale de gestion informatique qui commande les cycles de fonctionnement et les manipulateurs des pièces à assembler, des outils et des contre-outils en fonction des pièces à assembler et des opérations à effectuer.

Il apparaît clairement de cette description que l'invention permet d'atteindre tous les buts fixés. Le changement d'outils d'assemblage est rapide, de l'ordre de la demi-seconde, et s'effectue au plus près de la seconde pièce à assembler, donc sans perte de temps. Cette machine est de conception robuste et fiable permettant de garantir un assemblage de qualité. Elle s'adapte à tout type de postes de travail : seul, hors ligne alimenté par robots ou en ligne à axe vertical ou horizontal. Elle est modulaire et évolutive en fonction des outils montés sur la tourelle, comme une pince de serrage pneumatique, une broche de vissage, un palpeur, une pipette de graissage, une broche tournante, un outil de sertissage, etc. On peut même envisager de rendre le sous-ensemble chariot-tourelle interchangeable avec d'autres sous-ensembles chariot-tourelle équipés d'autres outils pour d'autres applications.

La présente invention n'est pas limitée aux exemples de réalisation décrits mais s'étend à toute modification et variante définies dans les revendications annexées.

## Revendications

1. Machine d'assemblage (1, 1A-D) d'au moins deux pièces mécaniques comportant au moins un bâti (2), un chariot (3) mobile en translation par rapport audit bâti (2) selon une direction (T) parallèle à l'axe d'assemblage (A) des pièces, ce chariot étant pourvu d'au moins un outil d'assemblage (4) en position travail confondu avec ledit axe d'assemblage (A) et portant au moins une première pièce à assembler, des moyens d'actionnement (5) couplés audit chariot (3) pour l'entraîner en translation et des moyens de positionnement (6) agencés pour présenter la seconde pièce à assembler dans ledit axe d'assemblage (A), **caractérisée en ce qu**'elle comporte une tourelle (8) agencée pour porter plusieurs outils d'assemblage (4, 4'), ladite tourelle (8) étant montée mobile en rotation sur ledit chariot (3) autour d'un axe de rotation (R) non parallèle audit axe d'assemblage (A) et disposée de manière à présenter un seul outil d'assemblage (4) en position travail, les autres outils d'assemblage (4') étant en position d'attente sur des axes distincts dudit axe d'assemblage (A), ladite tourelle (8) étant disposée sur ledit chariot (3) de manière que l'effort de poussée (P) généré par les moyens d'actionnement (5) soit transmis audit outil d'assemblage (4) en position travail par ledit chariot (3) sans être repris par ladite tourelle (8).

2. Machine d'assemblage selon la revendication 1, **caractérisée en ce que** l'axe de rotation (R) de la tourelle (8) et l'axe d'assemblage (A) ramenés dans un même plan sont sécants d'un angle α compris entre 30° et 60° et de préférence égal à 45°.

3. Machine d'assemblage selon la revendication 1, **caractérisée en ce que** la tourelle (8) comporte au moins un corps intérieur (80) creux solidaire du chariot (3) et un corps extérieur (81) creux mobile en rotation par rapport au corps intérieur (80) par des moyens de roulement (82).

4. Machine d'assemblage selon la revendication 1, **caractérisée en ce que** la tourelle (8) comporte une ouverture centrale (85) traversante pour le passage de conduits techniques.

5. Machine d'assemblage selon la revendication 3, **caractérisée en ce qu**'elle comporte des moyens d'entraînement (9) en rotation de la tourelle (8).

6. Machine d'assemblage selon la revendication 5, **caractérisée en ce que** lesdits moyens d'entraînement (9) comportent au moins un moteur (90) couplé à un pignon moteur (91) pour engrener un pignon récepteur (92) couplé au corps extérieur (81) de ladite tourelle (8).

7. Machine d'assemblage selon la revendication 6, **caractérisée en ce que** ledit pignon récepteur (92) est formé par une couronne extérieure dentée solidaire desdits moyens de roulement (82).

8. Machine d'assemblage selon la revendication 1, **caractérisée en ce que** lesdits outils d'assemblage (4, 4') sont montés sur ladite tourelle (8) par des moyens de fixation démontables (41).

9. Machine d'assemblage selon la revendication 8, **caractérisée en ce que** chaque outil d'assemblage (4, 4') comporte au moins un corps (40) creux fixe dans lequel coulisse un fourreau (44) présentant une extrémité interne (45) intérieure à la tourelle (8) agencée pour recevoir ledit effort de poussée (P) et une extrémité externe (46) extérieure à la tourelle (8) agencée pour recevoir une tête d'outil adaptée à la première pièce à assembler, un organe de rappel (48) étant disposé entre ledit corps (40) et ledit fourreau (44) pour solliciter ledit fourreau (44) en position sortie.

10. Machine d'assemblage selon la revendication 9, **caractérisée en ce que** ladite tourelle (8) comporte une butée intérieure (84) fixe agencée pour limiter la course axiale du fourreau (44) des outils d'assemblage (4, 4') en position rentrée.

11. Machine d'assemblage selon la revendication 1, **caractérisée en ce que** lesdits moyens d'actionnement (5) comportent au moins un moteur (50) couplé à une vis (54) engrenant un écrou (55) solidaire dudit chariot (3).

12. Machine d'assemblage selon la revendication 11, **caractérisée en ce que** lesdits moyens d'actionnement (5) comportent une pièce de transmission (56) disposée dans ledit axe d'assemblage (A) entre ledit chariot (3) et ledit outil d'assemblage (4) en position travail pour transmettre ledit effort de poussée (P).

13. Machine d'assemblage selon la revendication 1, **caractérisée en ce que** les moyens de positionnement (6) de la seconde pièce à assembler comportent une table de référence (60) présentant au moins une surface plane (61) perpendiculaire audit axe d'assemblage (A).

14. Machine d'assemblage selon la revendication 1, **caractérisée en ce que** les moyens de positionnement (6) de la seconde pièce à assembler comportent une table de référence (60) présentant au moins une surface plane (61) parallèle audit axe d'assemblage (A).

15. Machine d'assemblage selon la revendication 1, **caractérisée en ce que** les moyens de positionnement (6) comportent un manipulateur agencé pour présenter la seconde pièce à assembler dans ledit axe d'assemblage (A).

16. Machine d'assemblage selon la revendication 1, **caractérisée en ce que** les moyens de positionnement (6) comportent un convoyeur (11, 12) d'une ligne d'assemblage.

17. Machine d'assemblage selon la revendication 1, **caractérisée en ce qu**'elle comporte au moins un contre-appui (7) disposé dans ledit axe d'assemblage (A) à l'opposé dudit outil d'assemblage (4) en position de travail et agencé pour s'opposer audit effort de poussée (P).

18. Machine d'assemblage selon la revendication 17, **caractérisée en ce que** ledit contre-appui (7) comporte au moins un contre-outil d'assemblage.

19. Machine d'assemblage selon la revendication 18, **caractérisée en ce que** ledit contre-appui (7) comporte une contre-tourelle (10) agencée pour porter plusieurs contre-outils d'assemblage (7, 7'), ladite contre-tourelle (10) étant montée mobile en rotation sur ledit bâti (3) autour d'un axe de rotation (R') non parallèle audit axe d'assemblage (A) et disposée de manière à présenter un seul contre-outil d'assemblage (7) en position travail dans ledit axe d'assemblage (A), les autres contre-outils d'assemblage (7') étant en position d'attente sur des axes distincts dudit axe d'assemblage (A).

20. Machine d'assemblage selon la revendication 19, **caractérisée en ce que** l'axe de rotation (R') de la contre-tourelle (10) et l'axe d'assemblage (A) ramenés dans un même plan sont sécants d'un angle α compris entre 30° et 60° et de préférence égal à 45°.

21. Machine d'assemblage selon la revendication 17, **caractérisée en ce que** ledit contre-appui (7) est fixe en translation par rapport audit bâti (2) et **en ce que** lesdits moyens de positionnement (6) sont mobiles en translation par rapport à ce bâti (2) et sont agencés pour se déplacer avec ledit chariot (3).

22. Machine d'assemblage selon la revendication 17, **caractérisée en ce que** lesdits moyens de positionnement (6) sont fixes en translation par rapport audit bâti (2) et **en ce que** ledit contre-appui (7) est mobile en translation par rapport à ce bâti (2).

23. Machine d'assemblage selon la revendication 17, **caractérisée en ce que** lesdits moyens de positionnement (6) et ledit contre-appui (7) sont intégrés.

24. Machine d'assemblage selon la revendication 1, **caractérisée en ce que** lesdits moyens d'actionnement (5) comportent au moins un capteur d'effort (57) disposé entre ledit chariot (3) et ledit outil d'assemblage (4) en position de travail.

## Claims

1. An assembly machine (1, 1A-D) for at least two mechanical parts comprising at least a frame (2), a carriage (3) that can move relative to the said frame (2) in a direction (T) parallel to the assembly axis (A) of the parts, this carriage being provided with at least one assembly tool (4) in the operating position merged with the said assembly axis (A) and bearing at least a first part to be assembled, operating means (5) coupled to the said carriage (3) to drive it in translational motion and positioning means (6) designed to have the second part to be assembled in the said assembly axis (A), **characterised in that** it comprises a turret (8) designed to carry several assembly tools (4, 4'), the said turret (8) being rotatably mounted on the said carriage (3) around an axis of rotation (R) not parallel with the said assembly axis (A) and disposed so as to have a single assembly tool (4) in the operating position, with the other assembly tools (4') being in a waiting position on axes separate from the said assembly axis (A), the said turret (8) being disposed on the said carriage (3) so that the thrust force (P) generated by the operating means (5) is transmitted to the said assembly tool (4) in the operating position by the said carriage (3) without being absorbed by the said turret (8).

2. An assembly machine according to Claim 1, **characterised in that** the axis of rotation (R) of the turret (8) and the assembly axis (A) brought into the same plane are secants of an angle α of between 30° and 60°, and preferably equal to 45°.

3. An assembly machine according to Claim 1, **characterised in that** the turret (8) comprises at least a hollow inner body (80) integral with the carriage (3) and a hollow outer body (81) that can rotate in relation to the inner body (80) by rolling means (82).

4. An assembly machine according to Claim 1, **characterised in that** the turret (8) comprises a central through-aperture (85) for the passage of technical conduits.

5. An assembly machine according to Claim 3, **characterised in that** it comprises drive means (9) for rotating the turret (8).

6. An assembly machine according to Claim 5, **characterised in that** the said drive means (9) comprise at least one motor (90) coupled to a drive gear (91) to mesh with a counterdriven gear (92) coupled to the external body (81) of the said turret (8).

7. An assembly machine according to Claim 6, **characterised in that** the said counterdriven gear (92) is formed by an external ring gear integral with the said rolling means (82).

8. An assembly machine according to Claim 1, **characterised in that** the said assembly tools (4, 4') are mounted on the said turret (8) by detachable fasteners (41).

9. An assembly machine according to Claim 8, **characterised in that** each assembly tool (4, 4') comprises at least a hollow body (40) in which there slides a sliding bush (44) having an inner end (45) inside the turret (8) designed to absorb the said thrust force (P) and an outer end (46) outside the turret (8) designed to receive a tool head adapted to the first part to be assembled, a return element (48) being disposed between the said body (40) and the said sliding bush (44) to stress the said sliding bush (44) in the extended position.

10. An assembly machine according to Claim 9, **characterised in that** the said turret (8) comprises an inner fixed stop (84) designed to limit the axial travel of the sliding bush (44) of the assembly tools (4, 4') in the returned position.

11. An assembly machine according to Claim 1, **characterised in that** the said operating means (5) comprise at least one motor (50) coupled to a screw (54) meshing with a nut (55) integral with the said carriage (3).

12. An assembly machine according to Claim 11, **characterised in that** the said operating means (5) comprise a transmission part (56) disposed in the said assembly axis (A) between the said carriage (3) and the said assembly tool (4) in the operating position to transmit the said thrust force (P).

13. An assembly machine according to Claim 1, **characterised in that** the positioning means (6) of the second part to be assembled comprise a reference table (60) having at least one plane surface (61) perpendicular to the said assembly axis (A).

14. An assembly machine according to Claim 1, **characterised in that** the positioning means (6) of the second part to be assembled comprise a reference table (60) having at least one plane surface (61) parallel to the said assembly axis (A).

15. An assembly machine according to Claim 1, **characterised in that** the positioning means (6) comprise a manipulator designed to present the second part to be assembled in the said assembly axis (A).

16. An assembly machine according to Claim 1, **characterised in that** the positioning means (6) comprise a conveyor (11, 12) of an assembly line.

17. An assembly machine according to Claim 1, **characterised in that** it comprises at least one counter-support (7) that is disposed in the said assembly axis (A) opposite the said assembly tool (4) in the operating position and is designed to oppose the said thrust force (P).

18. An assembly machine according to Claim 17, **characterised in that** the said counter-support (7) comprises at least one assembly counter-tool.

19. An assembly machine according to Claim 18, **characterised in that** the said counter-support (7) comprises a counter-turret (10) designed to bear several assembly counter-tools (7, 7'), the said counter-turret (10) being rotatably mounted on the said frame (3) around an axis of rotation (R') not parallel to the said assembly axis (A) and disposed so as to have a single assembly counter-tool (7) in the operating position in the said assembly axis (A), the other assembly counter-tools (7') being in a waiting position on axes separate from the said assembly axis (A).

20. An assembly machine according to Claim 19, **characterised in that** the axis of rotation (R') of the counter-turret (10) and the assembly axis (A) located in the same plane are secants of an angle α of between 30° and 60° and preferably equal to 45°.

21. An assembly machine according to Claim 17, **characterised in that** the said counter-support (7) is fixed during translational motion relative to the said frame (2) and **in that** the said positioning means (6) are movable during translational motion relative to this frame (2) and are designed to moved with the said carriage (3).

22. An assembly machine according to Claim 17, **characterised in that** the said positioning means (6) are fixed during translational motion relative to the said frame (2) and **in that** the said counter-support (7) is moveable during translational motion relative to said frame (2).

23. An assembly machine according to Claim 17, **characterised in that** the said positioning means (6) and the said counter-support (7) are integrated.

24. An assembly machine according to Claim 1, **characterised in that** the said operating means (5) comprise at least one force sensor (57) disposed between the said carriage (3) and the said assembly tool (4) in the operating position.

## Patentansprüche

1. Montagemaschine (1,1A-D) mit mindestens zwei mechanischen Teilen, die mindestens ein Gestell (2), ein Fahrgestell (3) umfassen, welches im Verhältnis zu dem Gestell (2) in Form einer Translationsbewegung entsprechend einer parallel zu der Montageachse (A) der Teile verlaufenden Richtung (T) bewegbar ist, wobei das Gestell mit mindestens einem Montagewerkzeug (4) versehen ist, welches in der Arbeitsposition mit der Montageachse (A) zusammenfällt und mindestens ein erstes, zu montierendes Teil trägt, mit dem Fahrgestell (3) verbundene Betätigungs-einrichtungen (5) aufweist, um es in Form einer Translationsbewegung anzutreiben, sowie Positionierungseinrichtungen (6), die angeordnet sind, um das zweite, zu montierende Teil in die Montageachse (A) zu bringen, **dadurch gekennzeichnet, dass** sie einen Mehrfachwerkzeughalter (8) aufweist, der zum Tragen von mehrerer Montagewerkzeuge (4,4') angeordnet ist, wobei der Mehrfachwerkzeughalter (8) auf dem Fahrgestell (3) um eine Drehachse (R) drehbeweglich angeordnet ist, die nicht parallel zu der Montageachse (A) verläuft, und so angeordnet ist, dass er in der Arbeitsposition nur ein einziges Montagewerkzeug (4) aufweist, wobei sich die anderen Montagewerkzeuge (4') in der Warteposition auf sich von der Montageachse (A) unterscheidenden Achsen befinden, wobei der Mehrfachwerkzeughalter (8) auf dem Fahrgestell (3) so angeordnet ist, dass die von den Betätigungseinrichtungen (5) erzeugte Stoßkraft (P) in der Arbeitsposition durch das Fahrgestell (3) zu dem Montagewerkzeug (4) übertragen wird, ohne von dem Mehrfachwerkzeughalter (8) wieder aufgenommen zu werden.

2. Montagemaschine nach Anspruch 1, **dadurch gekennzeichnet, dass** die auf eine selbe Ebene gebrachte Drehachse (R) des Mehrfachwerkzeughalters (8) und die Montageachse (A) sich schneiden und einen Winkel α bilden, der zwischen einschließlich 30° und 60°, und vorzugsweise gleich 45° beträgt.

3. Montagemaschine nach Anspruch 1, **dadurch gekennzeichnet, dass** der Mehrfachwerkzeughalter (8) mindestens einen fest mit dem Fahrgestell (3) verbundenen hohlen Innenkörper (80) und einen hohlen Außenkörper (81) aufweist, der durch Rolleinrichtungen (82) im Verhältnis zu dem Innenkörper (80) drehbeweglich ist.

4. Montagemaschine nach Anspruch 1, **dadurch gekennzeichnet, dass** der Mehrfachwerkzeughalter (8) eine mittige Durchgangsöffnung (85) zum Durchgang technischer Leitungen aufweist.

5. Montagemaschine nach Anspruch 3, **dadurch gekennzeichnet, dass** sie Antriebseinrichtungen (9) zum Drehen des Mehrfachwerkzeughalters (8) aufweist.

6. Montagemaschine nach Anspruch 5, **dadurch gekennzeichnet, dass** die Antriebseinrichtungen (9) mindestens einen Motor (90) umfassen, der mit einem Antriebsritzel (91) gekoppelt ist, um in ein mit dem Außenkörper (81) des Mehrfachwerkzeughalters (8) gekoppeltes angetriebenes Ritzel (92) einzugreifen.

7. Montagemaschine nach Anspruch 6, **dadurch gekennzeichnet, dass** das angetriebene Ritzel (92) aus einem fest mit den Rolleinrichtungen (82) verbundenen Außenzahnkranz ausgebildet ist.

8. Montagemaschine nach Anspruch 1, **dadurch gekennzeichnet, dass** die Montagewerkzeuge (4,4') auf dem Mehrfachwerkzeughalter (8) mittels demontierbarer Befestigungseinrichtungen (41) angebracht sind.

9. Montagemaschine nach Anspruch 8, **dadurch gekennzeichnet, dass** jedes Montagewerkzeug (4,4') mindestens einen feststehenden Hohlkörper (40) aufweist, in dem eine Gleithülse (44) gleitet, deren eines äußerstes inneres Ende (45) in dem Mehrfachwerkzeughalter (8) liegt und angeordnet ist, um die Stoßkraft (P) aufzunehmen, und ein äußerstes äußeres Ende (46) außerhalb des Mehrfachwerkzeughalters (8), welches angeordnet ist, um einen an das erste, zu montierende Teil angepassten Werkzeugkopf aufzunehmen, wobei ein Rückholelement (48) zwischen dem Körper (40) und der Gleithülse (44) angeordnet ist, um die Gleithülse (44) in der ausgefahrenen Position zu belasten.

10. Montagemaschine nach Anspruch 9, **dadurch gekennzeichnet, dass** der Mehrfachwerkzeughalter (8) einen feststehenden Innenanschlag (84) aufweist, der angeordnet ist, um den Axialhub der Gleithülse (44) der Montagewerkzeuge (4,4') in der eingefahrenen Position zu begrenzen.

11. Montagemaschine nach Anspruch 1, **dadurch gekennzeichnet, dass** die Betätigungseinrichtungen (5) mindestens einen Motor (50) umfassen, der mit einer Schraube (54) gekoppelt ist, die eine fest mit dem Fahrgestell (3) verbundene Schraubenmutter (55) in Eingriff nimmt.

12. Montagemaschine nach Anspruch 11, **dadurch gekennzeichnet, dass** die Betätigungseinrichtungen (5) ein in der Montageachse (A) zwischen dem Fahrgestell (3) und dem Montagewerkzeug (4) in der Arbeitsposition angeordnetes Übertragungsteil (56) umfassen, um die Schubkraft (P) zu übertragen.

13. Montagemaschine nach Anspruch 1, **dadurch gekennzeichnet, dass** die Positionierungseinrichtungen (6) des zweiten, zu montierenden Teiles einen Referenztisch (60) umfassen, der mindestens eine ebene Fläche (61) senkrecht zu der Montageachse (A) aufweist.

14. Montagemaschine nach Anspruch 1, **dadurch gekennzeichnet, dass** die Positionierungseinrichtungen (6) des zweiten, zu montierenden Teiles einen Referenztisch (60) umfassen, der mindestens eine ebene Fläche (61) parallel zu der Montageachse (A) aufweist.

15. Montagemaschine nach Anspruch 1, **dadurch gekennzeichnet, dass** die Positionierungseinrichtungen (6) ein Betätigungselement umfassen, welches angeordnet ist, um das zweite, zu montierende Teil in die Montageachse (A) zu bringen.

16. Montagemaschine nach Anspruch 1, **dadurch gekennzeichnet, dass** die Positionierungseinrichtungen (6) eine Fördereinrichtung (11,12) einer Montagestraße umfassen.

17. Montagemaschine nach Anspruch 1, **dadurch gekennzeichnet, dass** sie mindestens eine Gegenstütze (7) aufweist, die in der Montageachse (A) dem Montagewerkzeug (4) in der Arbeitsposition entgegengesetzt angeordnet ist, und angeordnet ist, um der Schubkraft (P) entgegenzuwirken.

18. Montagemaschine nach Anspruch 17, **dadurch gekennzeichnet, dass** die Gegenstütze (7) mindestens ein Gegen-Montagewerkzeug umfasst.

19. Montagemaschine nach Anspruch 18, **dadurch gekennzeichnet, dass** die Gegenstütze (7) einen Gegen-Mehrfachwerkzeughalter (10) umfasst, der angeordnet ist, um mehrere Gegen-Montagewerkzeuge (7,7') zu tragen, wobei der Gegen-Mehrfachwerkzeughalter (10) auf dem Gestell (3) um eine Drehachse (R') herum drehbeweglich angeordnet ist, die nicht parallel zu der Montageachse (A) verläuft und so angeordnet ist, dass sie ein einziges Gegen-Montagewerkzeug (7) in die Arbeitsposition in die Montageachse (A) bringt, wobei sich die anderen Gegen-Montagewerkzeuge (7') in der Warteposition auf sich von der Montageachse (A) unterscheidenden Achsen befinden.

20. Montagemaschine nach Anspruch 19, **dadurch gekennzeichnet, dass** die auf eine selbe Ebene gebrachte Drehachse (R') des Gegen-Mehrfachwerkzeughalters (10) und die Montageachse (A) sich schneiden und einen Winkel α bilden, der zwischen einschließlich 30° und 60°, und vorzugsweise gleich 45° beträgt.

21. Montagemaschine nach Anspruch 17, **dadurch gekennzeichnet, dass** die Gegenstütze (7) im Verhältnis zu dem Gestell (2) bei Translationsbewegungen feststehend ist, und dass die Positionierungseinrichtungen (6) im Verhältnis zu dem Gestell (2) in Form einer Translationsbewegung bewegbar, und so angeordnet sind, dass sie sich mit dem Fahrgestell (3) verlagern.

22. Montagemaschine nach Anspruch 17, **dadurch gekennzeichnet, dass** die Positionierungseinrichtungen (6) im Verhältnis zu dem Gestell (2) bei Translationsbewegungen feststehend sind, und dass die Gegenstütze (7) im Verhältnis zu dem Gestell (2) in Form einer Translationsbewegung bewegbar ist.

23. Montagemaschine nach Anspruch 17, **dadurch gekennzeichnet, dass** die Positionierungseinrichtungen (6) und die Gegenstütze (7) integriert sind.

24. Montagemaschine nach Anspruch 1, **dadurch gekennzeichnet, dass** die Betätigungseinrichtungen (5) mindestens einen zwischen dem Fahrgestell (3) und dem Montagewerkzeug (4) in der Arbeitsposition angeordneten Beanspruchungssensor (57) umfassen.
